# FASCICULE DE BREVET EUROPEEN

(11) **EP 1 276 656 B1**
(45) Date de publication et mention de la délivrance du brevet: **21.05.2008**
(21) Numéro de dépôt: 01938047.6
(22) Date de dépôt: 26.03.2001
(51) Int. Cl.: B62D 17/00, B60G 7/00

(54) **DISPOSITIF DE SUPPORT D'UNE ROUE ET DISPOSITIF DE SUSPENSION COMPRENANT LEDIT DISPOSITIF DE SUPPORT**
AUFNAHMEVORRICHTUNG EINES RADS UND RADAUFHÄNGUNG, DIE DIESE AUFNAHMEVORRICHTUNG ENTHÄLT
WHEEL SUPPORTING DEVICE AND SUSPENSION DEVICE COMPRISING SAME

(30) Priorité: 27.03.2000 FR 0003929; 23.01.2001 FR 0101180
(43) Date de publication de la demande: 22.01.2003
(73) Titulaire: Société de Technologie Michelin, 63000 Clermont-Ferrand Cedex 09 (FR); Michelin Recherche et Technique S.A., 1763 Granges-Paccot (CH)
(72) Inventeur: SERRA, Loic, F-63450 Tallende (FR); TETAZ, Christian, F-63450 St. Amand Tallende (FR)
(74) Mandataire: Bauvir, Jacques
(86) Numéro de dépôt international: PCT/EP2001/003399
(87) Numéro de publication internationale: WO 2001/072572

(56) Documents cités:
- WO-A-96/37375
- DE-A- 19 649 245
- US-A- 4 700 972

## Description

La présente invention concerne la liaison au sol des véhicules, en particulier les dispositifs de suspension, et plus particulièrement le guidage des roues. Les dispositifs de suspension ont deux fonctions principales qui doivent être assurées simultanément à tout moment lors du fonctionnement. L'une de ces fonctions est celle de suspendre le véhicule, c'est à dire permettre des oscillations sensiblement verticales de chaque roue en fonction de la charge appliquée à cette roue. L'autre de ces fonctions est celle de guider la roue c'est à dire contrôler la position angulaire du plan de roue.

On appelle "plan de roue" le plan, lié à la roue, qui est perpendiculaire à l'axe de la roue et qui passe par le centre de l'aire de contact avec le sol. La position angulaire du plan de roue par rapport à la caisse du véhicule est définie par deux angles, l'angle de carrossage et l'angle de braquage. L'angle de carrossage d'une roue est l'angle séparant, dans un plan transversal perpendiculaire au sol, le plan de roue du plan médian du véhicule. Cet angle est positif lorsque la partie supérieure de la roue s'écarte du plan médian vers l'extérieur du véhicule, on parle alors couramment de "carrossage" ou de "carrossage positif ". A l'inverse, lorsque cet angle est négatif, on parle de "contre-carrossage" ou de "carrossage négatif'. L'angle de braquage d'une roue est l'angle séparant, dans un plan horizontal parallèle au sol, le plan de roue du plan médian du véhicule.

Sur la plupart des véhicules, l'angle de carrossage (on emploiera indifféremment « carrossage » ou « angle de carrossage » par la suite) est fixe pour une position particulière de la suspension et du braquage c'est à dire qu'il ne peut théoriquement pas varier indépendamment du débattement de suspension ou du braquage. Cependant, il subit des variations induites par les déformations des éléments constitutifs du dispositif de suspension provoquées par les efforts exercés par le sol sur la roue. Ces variations peuvent être importantes. Par exemple, un véhicule de tourisme courant voit son carrossage varier de plusieurs degrés sous les efforts transversaux développés sur le pneumatique dans une courbe, indépendamment de la contribution du roulis de la caisse du véhicule (qui s'incline généralement dans le même sens sous l'effet de la force centrifuge). Cette variation « élastique » du carrossage fait augmenter le carrossage (le carrossage tend vers des valeurs positives) pour la roue extérieure au virage. Inversement, le carrossage diminue (il tend vers des valeurs négatives) pour la roue intérieure au virage. On intègre depuis longtemps ces variations prévisibles dans les compromis de conception ou de réglage des dispositifs de suspension de ces véhicules courants afin de limiter les effets néfastes qu'elles ont sur le fonctionnement de la liaison au sol.

Le carrossage a en effet une grande influence sur le comportement du véhicule et les performances de la liaison au sol. En particulier, les performances d'un pneumatique sont très variables en fonction de la configuration de son aire de contact au sol et cette configuration dépend en grande mesure du carrossage. Ce sont ces variations qui motivent principalement le choix de l'angle de carrossage statique. Ainsi, par exemple, on introduit généralement un carrossage statique négatif important sur un véhicule de compétition afin de compenser les variations dues aux déformations du pneumatique sous effort transversal, des éléments de suspension pourtant bien plus rigides que sur les véhicules de tourisme et au roulis de la caisse. Cette configuration est à la fois utile et acceptable en compétition car les critères d'adhérence en virage y sont prédominants. Au contraire, sur un véhicule de tourisme, l'usure des pneumatiques et la stabilité en ligne droite ayant plus de poids dans le compromis recherché, on choisit un carrossage statique initial très faiblement négatif et on s'accommode de poussées de dérives réduites, lorsque les déformations du pneumatique et des éléments de la liaison au sol sous les efforts latéraux voient leurs effets sur le positionnement du plan de roue s'additionner aux effets du roulis du véhicule.

Dans le but d'optimiser le carrossage, en particulier lors d'accélérations transversales, on a conçu des dispositifs de suspension dont le carrossage varie en fonction du débattement vertical de la roue. De cette manière, le roulis pris par la caisse du véhicule peut induire une variation utile du carrossage qui vienne compenser en partie ou totalement l'inclinaison de la caisse du véhicule et les déformations décrites plus haut. C'est le cas des systèmes appelées « multi-bras ». Ces dispositifs exigent une conception et une architecture de véhicule spécifiques, qu'on ne peut pas, pour des raisons d'encombrement et de prix de revient, mettre en oeuvre sur la plupart des véhicules actuels. Ces systèmes ne réagissent qu'à la conséquence (débattement, roulis) d'une accélération transversale et non aux efforts qui la provoquent ce qui d'une part retarde l'effet de la correction. De plus, pour permettre une variation suffisante du carrossage, la cinématique de ces systèmes imposent des déplacements de la position de l'aire de contact par rapport au véhicule, appelées « variations de voie » et ces variations peuvent également constituer une gêne. L'amplitude des corrections de carrossage rendues possibles par de tels systèmes est donc relativement limitée lorsque l'on veut respecter le compromis nécessaire à un bon fonctionnement des autres cas de charge comme le roulage sur route bosselée, le pompage unilatéral ou au contraire simultané.

Du point de vue cinématique, en termes de degrés de liberté, les dispositifs de suspension n'ont en général qu'un degré de liberté (de la roue ou du porte-roue par rapport au véhicule). Ce degré de liberté permet des mouvements de suspension verticale qui, comme on vient de le voir, peuvent être combinés à des variations de carrossage limitées.

On connaît cependant des systèmes où le contrôle du carrossage est actif, c'est-à-dire que les modifications de géométrie sont commandées par des mouvement de vérins, comme décrit, par exemple, dans les documents US 4515390, US 4700972, et DE 19717418. Dans ces systèmes, on a permis au moins un degré de liberté supplémentaire contrôlé par des actionneurs. Ces systèmes sont très particuliers puisqu'ils ne peuvent pas concerner les véhicules les plus courants en particulier à cause de leur encombrement et de la puissance importante nécessaire aux actionneurs.

Un objectif de l'invention est un dispositif de construction simple, qui autorise un contrôle du carrossage sans apport d'énergie ou avec un apport limité, sensiblement indépendamment des oscillations verticales de la suspension et, plus généralement, des mouvements de la caisse du véhicule, et qui permette de minimiser les variations de voie.

Cet objectif est réalisé par un dispositif de support selon la revendication 1. Ce dispositif de support remplace en fait le porte-roue rigide de l'état de la technique. On entend par « éléments de suspension » les éléments assurant la reprise de charge et conférant le débattement généralement vertical à la roue, comme les bras, les ressorts, les amortisseurs ou les liaisons anti-roulis.

De préférence, ledit premier centre instantané de rotation est situé sous le plan du sol.

De préférence encore, ledit premier centre instantané de rotation est situé transversalement sous ladite aire de contact.

Selon un mode de réalisation le dispositif de support est configuré de manière à ce qu'il soit proche de l'équilibre dans ladite position moyenne en l'absence d'effort transversal exercé par le sol sur la roue dans l'aire de contact. Cet équilibre peut être un équilibre instable.

De préférence, ledit premier centre instantané de rotation est situé sensiblement dans le plan de la roue.

De préférence, le dispositif de support de l'invention comprend un porte-roue et il est destiné à être lié à un support intermédiaire, ledit support intermédiaire constituant l'un desdits éléments de suspension.

Selon un mode de réalisation, le porte-roue est lié au support intermédiaire par des biellettes configurées de façon à permettre le mouvement de carrossage du porte-roue par un mouvement instantané de rotation du porte-roue par rapport au support intermédiaire.

Selon un autre mode de réalisation, ledit degré de liberté de carrossage est conféré par des déformations élastiques d'éléments déformables liant le porte-roue aux dits éléments de suspension.

Lesdits éléments de suspension peuvent comprendre une jambe de force Macpherson.

Le dispositif de support selon l'invention peut comporter en outre des moyens de contrôle aptes à influencer le carrossage de la roue. Ces moyens de contrôle peuvent comprendre un élément élastiquement déformable s'opposant au mouvement de carrossage, cet élément élastiquement déformable étant constitué de préférence par des articulations élastomériques.

L'invention concerne également un dispositif de suspension pour véhicule comprenant le dispositif de support décrit ci-dessus selon la revendication 13.

Ce dispositif de suspension, qui est destiné à relier un porte-roue à une caisse d'un véhicule, ledit porte-roue étant destiné à porter une roue de rayon 'R', ladite roue étant destinée à reposer au sol par l'intermédiaire d'une aire de contact, comporte des moyens conférant au porte-roue, par rapport à la caisse, un degré de liberté de carrossage et un degré de liberté de débattement de suspension indépendants l'un de l'autre, et les dits moyens sont configurés de manière à ce que le mouvement de carrossage du porte-roue par rapport à la caisse admette, autour d'une position moyenne, un deuxième centre instantané de rotation situé dans un intervalle allant de 0.5 R au dessus du sol à R en dessous du sol. Le dispositif de suspension de l'invention comporte deux degrés de liberté permettant des mouvements de suspension et de carrossage indépendants. Le mouvement de carrossage de la roue (ou du porte-roue) s'effectue autour d'un deuxième centre instantané de rotation situé à une distance limitée de l'aire de contact afin de limiter les variations de voie lors de la prise de carrossage ou de contre-carrossage et de limiter l'apport d'énergie nécessaire dans le cas d'un contrôle actif du carrossage.

Dans un mode de réalisation préféré, ledit centre instantané de rotation est situé dans un intervalle allant de 0.2 R au dessus du sol à 0.4 R en dessous du sol et préférentiellement encore, de 0:1 R au dessus du sol à 0.3 R en dessous du sol.

Afin d'assurer un fonctionnement stable, le dispositif est, de préférence, configuré de manière à ce qu'il soit proche de l'équilibre dans ladite position moyenne en l'absence d'effort transversal exercé par le sol sur la roue dans l'aire de contact et préférentiellement encore, configuré de manière à ce que, en l'absence de variations de carrossage, l'effort transversal exercé par le sol sur la roue dans l'aire de contact généré au cours du débattement de suspension ne dépasse pas une limite correspondant à 0.3 P, « P » étant le poids du véhicule.

Un mode préféré de réalisation de l'invention comporte un support intermédiaire lié d'une part à la caisse et d'autre part au porte-roue, la liaison dudit support intermédiaire au porte-roue permettant ledit degré de liberté de carrossage et la liaison dudit support intermédiaire à la caisse permettant ledit degré de liberté de débattement de suspension.

Pour permettre un fonctionnement passif, ledit deuxième centre instantané de rotation du mouvement du porte-roue par rapport à la caisse du véhicule peut être de préférence situé sous le plan du sol afin que des efforts transversaux exercés par le sol sur la roue dans l'aire de contact induisent une inclinaison du porte-roue par rapport à la caisse dans le sens d'une diminution de carrossage lorsque lesdits efforts transversaux sont dirigés vers l'intérieur du véhicule et dans le sens d'une augmentation de carrossage lorsque lesdits efforts transversaux sont dirigés vers l'extérieur du véhicule. Dans ce cas de fonctionnement passif lié aux efforts transversaux, le dispositif peut comporter un moyen de mesure du mouvement de carrossage du porte-roue afin d'en déduire lesdits efforts transversaux.

Dans certaines conditions, il peut être nécessaire ou intéressant de prévoir en outre des moyens de contrôle aptes à influencer le carrossage de la roue. Ces moyens peuvent comprendre un élément élastiquement déformable s'opposant au mouvement de carrossage, l'élément déformable étant constitué par exemple par des articulations élastomériques.

De préférence ledit degré de liberté de carrossage peut être contrôlé par un moyen actif en fonction de paramètres de roulage dudit véhicule.

L'invention concerne également un dispositif de suspension selon la revendication 19.

Enfin, l'invention concerne un véhicule équipé d'un tel dispositif de suspension.

Plusieurs modes de réalisation de l'invention vont être décrits afin d'en illustrer les caractéristiques et d'en exposer les principes. Naturellement, de nombreux autres modes de réalisation de l'invention sont possibles comme le suggèrent les nombreuses variantes présentées.
- Fig 1: Schémas de principe et de fonctionnement d'un dispositif selon l'invention.
- Fig 2: Schéma d'un dispositif selon un premier mode de réalisation de l'invention en vue longitudinale,
- Fig 3: Schéma du dispositif de la figure 2 en vue longitudinale lorsqu'il est soumis à un effort transversal,
- Fig 4: Schéma d'un dispositif selon un deuxième mode de réalisation de l'invention,
- Fig 5: Schéma d'un dispositif selon un troisième mode de réalisation de l'invention,
- Fig 6: Schéma d'un dispositif selon un quatrième mode de réalisation de l'invention,
- Fig 7: Schéma d'un dispositif selon un cinquième mode de réalisation de l'invention,
- Fig 8: Schéma d'un dispositif selon un sixième mode de réalisation de l'invention,
- Fig 9: Schéma d'un dispositif selon un septième mode de réalisation de l'invention,
- Fig 10: Schéma d'un dispositif selon un huitième mode de réalisation de l'invention.

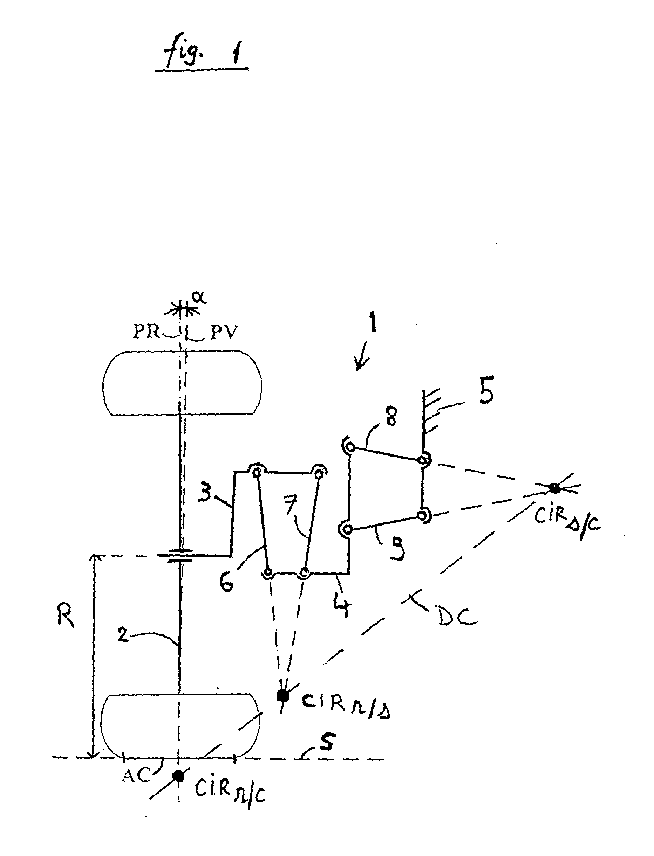

La figure 1 représente en vue longitudinale plane le principe d'un dispositif de suspension selon l'invention. Cette représentation plane (c'est à dire en 2 dimensions) est très commode car elle montrent bien ce en quoi le dispositif selon l'invention se distingue des dispositifs de l'état de la technique.

Le dispositif de suspension 1 comprend un porte-roue 3 destiné à maintenir le plan PR d'une roue 2, par rapport à la caisse 5 d'un véhicule. La roue, de rayon « R », est en appui sur le sol S par l'intermédiaire de son aire de contact AC. Le porte-roue 3 est lié à la caisse 5 par des moyens (4, 6, 7 ,8 ,9) lui permettant deux degrés de liberté. Le mouvement de carrossage de la roue est permis par un liaison du porte-roue 3 avec le support intermédiaire 4 par des biellettes 6 et 7. Le mouvement de débattement de suspension est permis par une liaison du support intermédiaire 4 avec la caisse 5 par des bras (ou des triangles) supérieur 8 et inférieur 9. Ainsi, le dispositif de suspension 1 est configuré de manière à conférer au porte-roue, par rapport à la caisse 5, un degré de liberté de carrossage puisque le porte-roue peut s'incliner par rapport à la caisse et un degré de liberté de débattement de suspension puisque le porte-roue peut effectuer des mouvements sensiblement verticaux de façon connue en soi, par exemple à la manière des systèmes « multi-bras » ou « double triangle ».

Le mouvement du porte-roue 3 par rapport au support intermédiaire 4 admet un premier centre instantané de rotation (CIR r/s). Le mouvement du porte-roue par rapport à la caisse admet sous effort transversal un deuxième centre instantané de rotation (CIR r/c). Le mouvement du support intermédiaire 4 par rapport à la caisse 5 admet un troisième centre instantané de rotation (CIR s/c). En appliquant l'hypothèse classique d'une liaison ponctuelle de la roue 2 sur le sol S, la théorie de la colinéarité des centres instantanés de rotation dans un mouvement plan permet de situer le deuxième centre instantané de rotation (CIR r/c) du mouvement de carrossage à l'intersection du plan de roue PR et de la droite (DC) portant les premier et troisième centres instantanés de rotation. Cette théorie cinématique est d'usage courant dans le domaine de la liaison au sol. On comprend alors que c'est le choix de la configuration, c'est à dire des dimensions et de l'orientation des différent éléments constitutifs du dispositif de suspension qui (en définissant les positions des axes caractéristiques) permet d'obtenir une position voulue du deuxième centre instantané de rotation (CIR r/c) du mouvement de carrossage de la roue par rapport à la caisse sous effort transversal. La figure 1 représente le dispositif de suspension dans une position moyenne, que l'on pourrait définir comme la position correspondant au roulage en ligne droite sur un sol plat, le véhicule portant sa charge nominale. Le carrossage statique est représenté ici par l'angle α que forme le plan de roue PR avec le plan PV passant par le centre de l'aire de contact et parallèle au plan médian du véhicule. Cette figure montre le fonctionnement cinématique du dispositif de l'invention. L'équilibre statique des efforts subis par le système (poids du véhicule, efforts du sol sur la roue, ressorts de suspension) doit être naturellement assuré par la conception du système. En particulier, on choisit dans ce but les points d'ancrage et les directions de poussée des ressorts portant la charge. On peut de plus ajouter des raideurs au niveau des articulations de manière à contrôler l'angle de carrossage statique par la position du porte-roue 3 par rapport au support intermédiaire 4. Ces raideurs peuvent être fournies par des articulations élastiques ou par des ressorts additionnels.

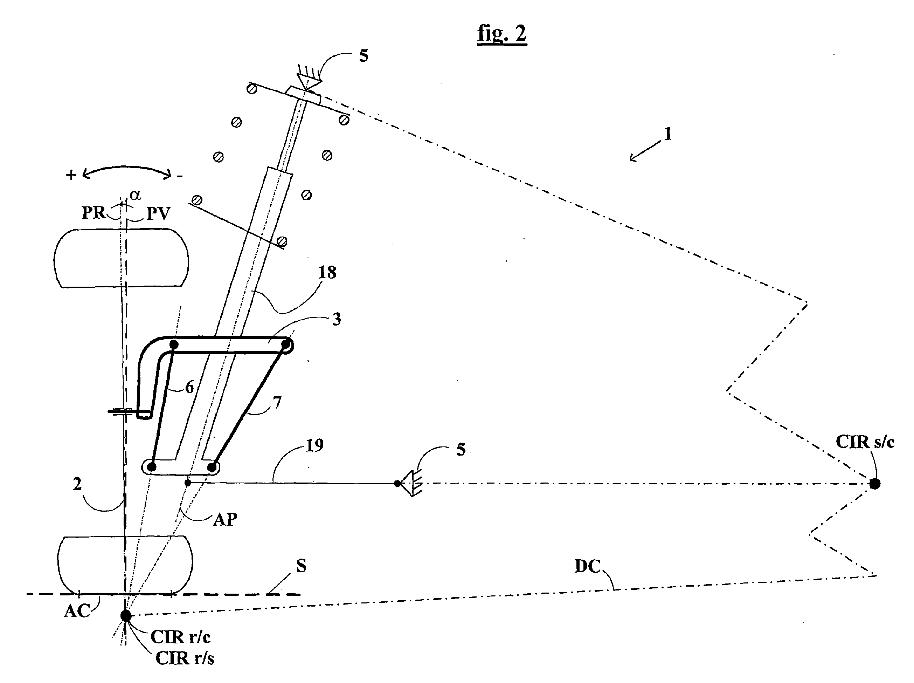

La figure 2 représente un mode de réalisation du dispositif de suspension de l'invention. Sur cet exemple, le mouvement de débattement de suspension est assuré par une jambe de force MacPherson 18 et un bras ou triangle inférieur 19. L'axe de pivot AP est l'axe autour duquel pivote la jambe de force pour permettre de diriger le véhicule de manière connue en soi. Sur cette jambe de force est articulé un porte-roue 3 par des biellettes 6 et 7. La jambe de force constitue dans ce mode de réalisation le support intermédiaire 4 de la figure 1. De plus, le premier centre instantané de rotation (CIR r/s) du mouvement du porte-roue par rapport à ce support intermédiaire 18 se trouve à l'intersection des axes des biellettes 6 et 7, sous l'aire de contact AC, et sensiblement dans le plan de roue PR ce qui constitue une configuration préférée. En vertu du principe de colinéarité énoncé plus haut, le deuxième centre instantané de rotation de carrossage (CIR r/c) est confondu avec le premier centre instantané de rotation (CIR r/s) du mouvement du porte-roue par rapport au support intermédiaire/jambe de force 18. Cette configuration présente un équilibre parfaitement stable, c'est à dire que même en l'absence de raideur au niveau des articulations des biellettes (comme c'est le cas pour des rotules ou des axes mécaniques), le dispositif est en équilibre dans sa position moyenne en l'absence d'effort transversal exercé par le sol (S) sur la roue dans l'aire de contact (AC). Dans la pratique, compte tenu des différents éléments déformables comme le pneumatique, un configuration proche de l'équilibre théorique peut être satisfaisante en terme de fonctionnement. Des expérimentations ont montré que lorsque la position du premier centre instantané de rotation (CIR r/s) par rapport au centre de la roue forme un angle inférieur à 15° avec le plan de la roue, cette condition peut être satisfaite.

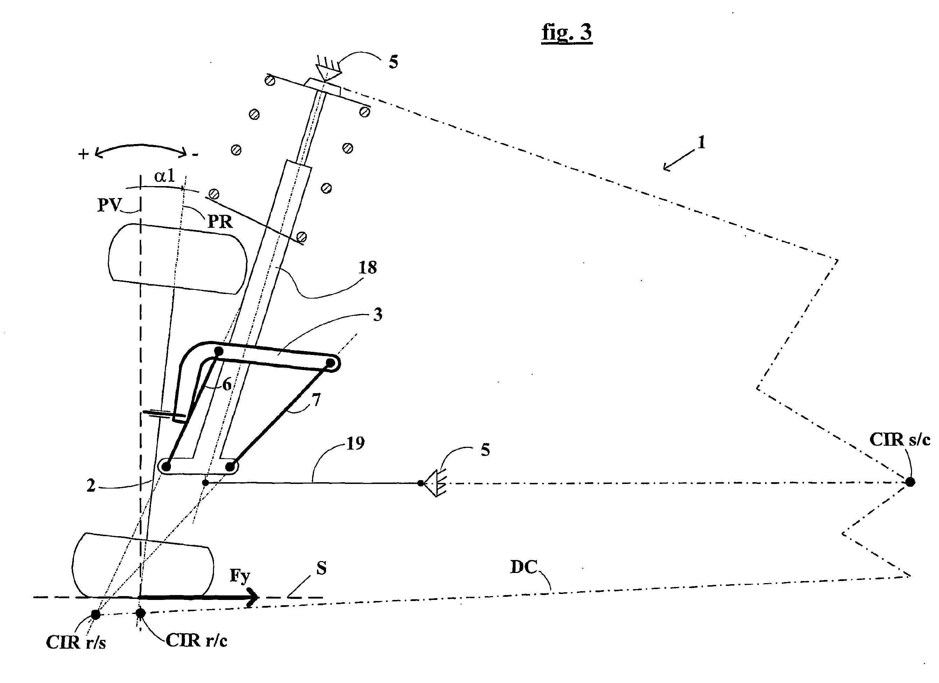

La figure 3 représente le mode de réalisation de la figure 2 lorsque la roue 2 est soumise dans l'aire de contact (AC) à un effort dont la composante transversale Fy est orientée vers l'intérieur du véhicule. C'est le cas de la roue qui se trouve du côté extérieur à une trajectoire courbe du véhicule. Le fait que le deuxième centre instantané de rotation (CIR r/c) du mouvement de carrossage se situe sous le plan du sol (S) implique que la composante Fy génère un couple qui tend à faire pivoter le porte-roue dans le même sens que Fy. Cette rotation se fait dans le sens du contre-carrossage (c'est à dire que l'angle de carrossage α1 diminue, il tend vers des valeurs négatives). Naturellement, lorsque la roue est soumise à un effort dont la composante transversale est orientée vers l'extérieur du véhicule (c'est le cas de la roue qui se trouve du côté intérieure à une trajectoire courbe) la composante Fy génère un couple qui tend à faire pivoter le porte-roue dans le sens d'une augmentation de carrossage (c'est à dire que l'angle de carrossage α1 augmente, il tend vers des valeurs positives). Le premier centre instantané de rotation (CIR r/s) étant le point d'intersection des axes des biellettes (6, 7) qui définissent la cinématique des mouvements du porte-roue 3 par rapport à la jambe de force 18, la position de ce point est variable lors des mouvements de carrossage du porte-roue comme on le voit en comparant les figures 2 et 3. Cependant on remarque aussi que la position du deuxième centre instantané de rotation (CIR r/c) du mouvement de carrossage du porte-roue 3 par rapport à la caisse 5 du véhicule varie moins. Cette légère variation de la position du deuxième centre instantané de rotation (CIR r/c) lors des mouvements de carrossage peut être utilisée pour faire varier progressivement le couple généré par les efforts transversaux dans l'aire de contact. Sur l'exemple de la figure 3, cet effet stabilise le système, car le couple qui génère le carrossage a tendance à diminuer lorsque le carrossage s'écarte de sa valeur moyenne du fait de la diminution de la distance entre le deuxième centre instantané de rotation (CIR r/c) et le sol, qui constitue le bras de levier sur lequel s'applique l'effort transversal Fy.

La figure 3 représente, pour la commodité, la variation de carrossage de la roue générée par un effort transversal Fy dans le cas d'un véhicule « idéal », c'est à dire parfaitement rigide. En réalité, sur la plupart des véhicules actuels, un effort transversal génère également un roulis (c'est à dire une inclinaison du plan de référence PV) de la caisse vers l'extérieur d'un virage ce qui tend à incliner le plan de roue vers l'extérieur du virage (lire plus haut). Dans ce cas, ces deux effets sont inverses. Ainsi, la variation illustrée sur la figure 3 est à considérer relativement à la caisse, c'est à dire au plan PV lié à la caisse. Pour connaître la position de la roue relativement au sol, il faut naturellement intégrer la variation induite par le roulis (et également par les déformations des différents éléments de la liaison au sol).

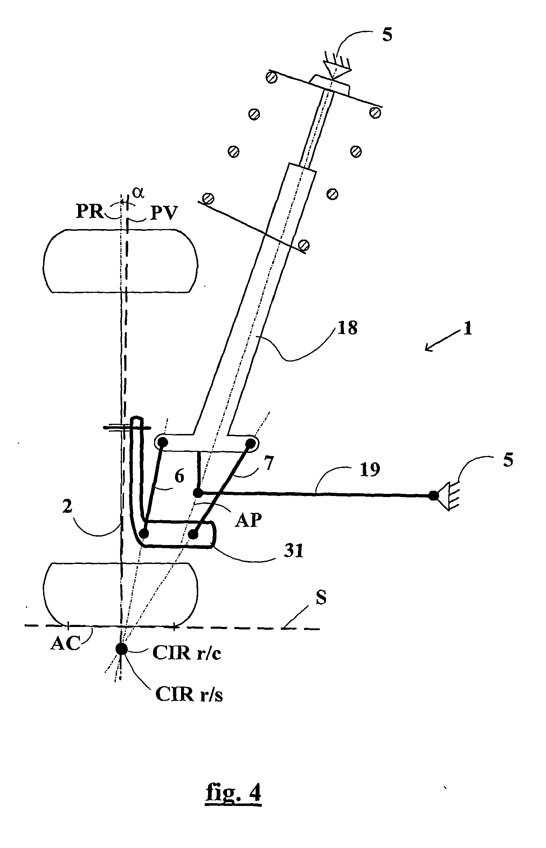

La figure 4 représente une configuration différente de la figure 2 mais utilise des éléments semblables. La différence réside dans le fait que le porte-roue 31 se situant sous les points de liaison à la jambe de force 18, les biellettes 6 et 7 travaillent en compression. Ainsi, l'équilibre du porte-roue est un équilibre instable alors qu'il est stable dans le cas de la figure 2. Un avantage de cette instabilité est qu'elle peut permettre d'obtenir une plus grande sensibilité autour de la position moyenne. Afin de permettre la comparaison directe avec les autres figures, les centres instantanés de rotation (CIR r/s, CIR s/c, CIR r/c) ont les mêmes positions (dans la position moyenne de la roue). Cependant, ceci, comme pour le premier mode, n'est qu'un exemple, une infinité de configurations étant possibles comme décrit à la figure 1.

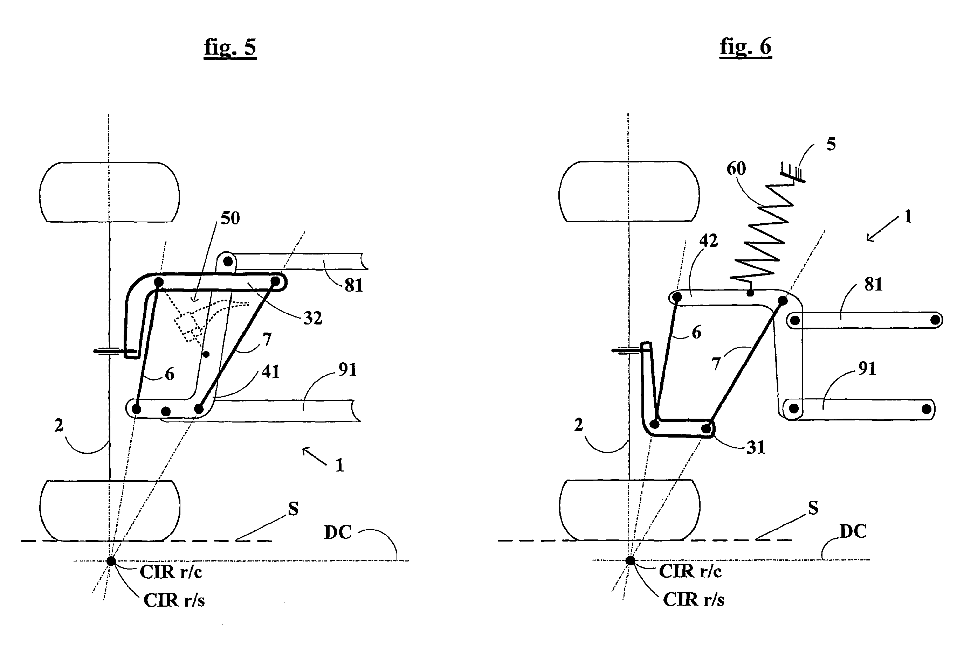

La figure 5 montre une architecture proche de celle de la figure 1. En effet, le degré de liberté de débattement de suspension est assuré ici par un système « multi-bras » ou « double triangle » connu en soi. Sur cet exemple, les bras 81 et 91 étant parallèles entre eux et horizontaux, la droite DC portant les centres instantanés de rotation est également horizontale. Ce dispositif se différencie de celui de la figure 1 en ce que, selon un mode préféré de réalisation semblable à celui des figures 2 et 3, le premier centre instantané de rotation (CIR r/s) du mouvement du porte-roue 32 par rapport au support intermédiaire 41 est positionné sensiblement dans le plan de roue PR, pour une position moyenne de la roue 2 en terme de carrossage. Ainsi, ce point constitue également le deuxième centre instantané de rotation (CIR r/c) du mouvement de carrossage du porte-roue par rapport à la caisse. On a représenté également en pointillé, un moyen de contrôle 50, actif ou passif, sous la forme d'un vérin apte à imposer ou à limiter les variations de carrossage. Dans le cas d'un contrôle actif, la position du deuxième centre instantané de rotation (CIR r/c) du mouvement de carrossage se situe avantageusement au niveau du sol S ou au dessus de ce niveau mais à une distance réduite pour permettre un contrôle à faible énergie et limiter la variation de voie occasionnée par les mouvements du plan de roue.

Au contraire, le moyen de contrôle peut avoir un rôle passif de régulation des mouvements de carrossage provoqués par exemple par les efforts transversaux comme exposé par la figure 3.

Qu'il soit passif ou actif le moyen de contrôle, s'il est pilotable, peut être commandé en fonction de divers paramètres de roulage du véhicule (par exemple, accélération longitudinale ou transversale, position du volant, roulis de caisse, capteur de lacet, efforts sur les roues, type de conduite, comportement souhaité par le conducteur).

Suivant une construction similaire, le moyen de contrôle peut être remplacé par un moyen de mesure des mouvements de carrossage. Dans le cas de mouvements de carrossage provoqués par les efforts transversaux, cette mesure permet par des méthodes connues en soi de connaître ces efforts. L'avantage d'un tel système de mesure est qu'il se base sur un déplacement important, sans commune mesure avec les déplacements mesurés par exemple par des jauges de contrainte que l'on implante parfois sur les éléments de suspension. Cette connaissance des efforts transversaux est utile par exemple pour piloter des systèmes de sécurité ou de régulation du comportement du véhicule.

La figure 6 représente un dispositif comparable à celui de la figure 5 en terme de cinématique mais différent en terme de stabilité de l'équilibre comme on l'a décrit pour la figure 4. Les biellettes 6 et 7 travaillent ici en compression entre le porte-roue 31 et le support intermédiaire 42. On a représenté le ressort de suspension 60 en appui sur le support intermédiaire 42 mais il peut naturellement prendre appui sur le porte-roue 31 ou sur l'un des bras supérieur 81 ou inférieur 91 comme dans les systèmes de suspension connus.

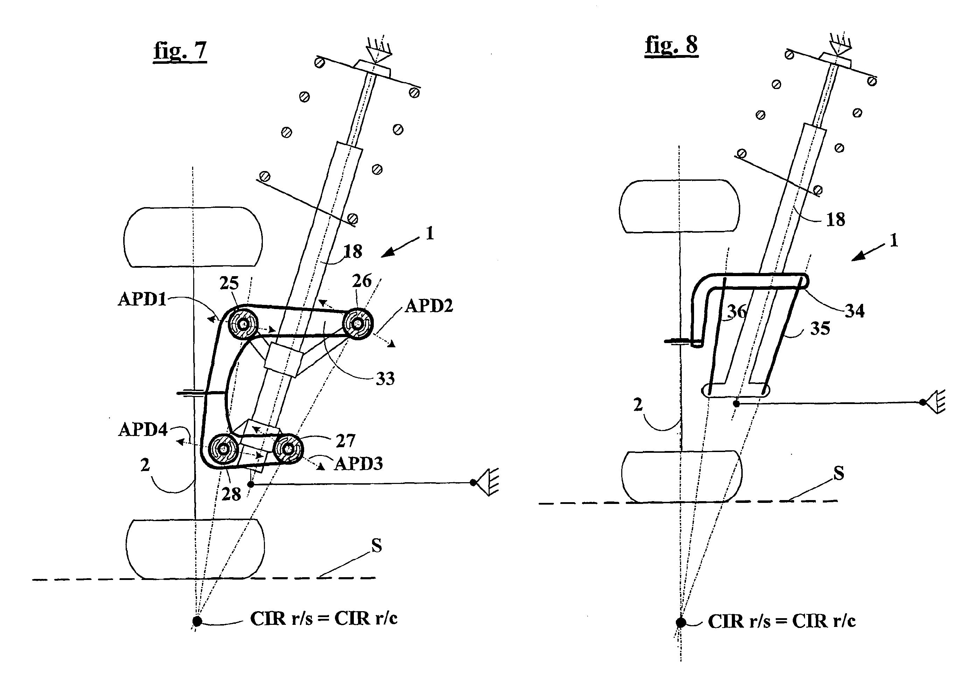

Les figures 7 et 8 représentent des modes alternatifs de réalisation de l'invention.

Le dispositif de la figure 7 comprend un porte-roue 33 lié par des éléments déformables 25, 26, 27, 28 à la jambe de force 18 qui constitue ici le support intermédiaire. Ces éléments déformables sont ici des articulations élastomériques. La distribution spécifique des raideurs radiales de ces articulations selon l'azimut permet (si l'on considère de faibles déplacements) de créer une liaison de type « glissière » suivant les axes préférentiels de déformation (APD1, APD2, APD3, APD4). L'agencement des articulations 25, 26, 27, 28, donc de ces liaisons « glissière », donne au porte-roue 33 la cinématique recherchée par rapport aux éléments de suspension ainsi que les raideurs et les fonctions de butées utiles au contrôle du dispositif. Le premier centre instantané de rotation (CIR r/s) du mouvement du porte-roue par rapport à la jambe de force 18 se situe à l'intersection des normales aux axes préférentiels de déformation (APD1, APD2, APD3, APD4). Cette configuration génère une amplitude de carrossage suffisante pour la plupart des applications et participe au filtrage de la suspension du véhicule. Dans l'exemple illustré ici, la distribution spécifique de raideurs radiales est obtenue par la présence d'alvéoles le long des axes préférentiels de déformation dans les manchons élastomériques des articulations 25, 26, 27, 28 mais l'homme du métier des articulations élastomériques connaît différentes solutions en fonction du cahier des charges de telles articulations. Le deuxième centre instantané de rotation (CIR r/c) du mouvement du porte-roue par rapport à la caisse du véhicule est, dans cette position, confondu avec le premier centre instantané de rotation (CIR r/s) comme exposé à la figure 2.

On a représenté ici quatre articulations élastomériques mais ce nombre est arbitraire puisque deux pourraient suffire. D'autre part, la liaison de la roue (ou du porte-roue) à la jambe de force doit assurer également le guidage du plan de roue en braquage. On peut, par exemple pour conférer une bonne rigidité en braquage, utiliser un porte-roue constitué de deux plans parallèles et distants, situés de part et d'autre de la jambe de force, chacun de ces deux plans ayant les caractéristiques décrites sur la figure 7.

La figure 8 représente une architecture proche de celle de la figure 2. Cependant, ce sont des pièces déformables 35, 36 qui, par leur souplesse propre et non par une liaison pivotante, procurent le degré de liberté de carrossage recherché. On a représenté ici deux pièces souples mais ce nombre est arbitraire. Les liaisons entre ces pièces déformables (35, 36), le porte-roue 34 et la jambe de force 18, sont rigides. Un avantage de cette solution est de supprimer les articulations nécessaires au fonctionnement des modes de réalisation des figures 2 à 6. Les pièces déformables (35, 36) peuvent être réalisées en métal ou en matériau composite. On peut également réaliser ces pièces déformables (35, 36), le porte roue 34 et le moyen de liaison à la suspension 5 de façon monobloc et obtenir la cinématique désirée par une répartition adéquate des rigidités au sein de cette pièce unique. Dans ce cas, l'emploi d'un composite peut être avantageux. Sur cet exemple, on a représenté un premier centre instantané de rotation (CIR r/s) du mouvement du porte-roue 34 par rapport au support intermédiaire/jambe de force 18 situé à environ 0.75 R sous le sol S. Cette configuration rend le système plus sensible aux efforts transversaux subis par la roue dans l'aire de contact. Le deuxième centre instantané de rotation (CIR r/c) du mouvement du porte-roue par rapport à la caisse du véhicule est, dans cette position, confondu avec le premier centre instantané de rotation (CIR r/s) comme exposé à la figure 2.

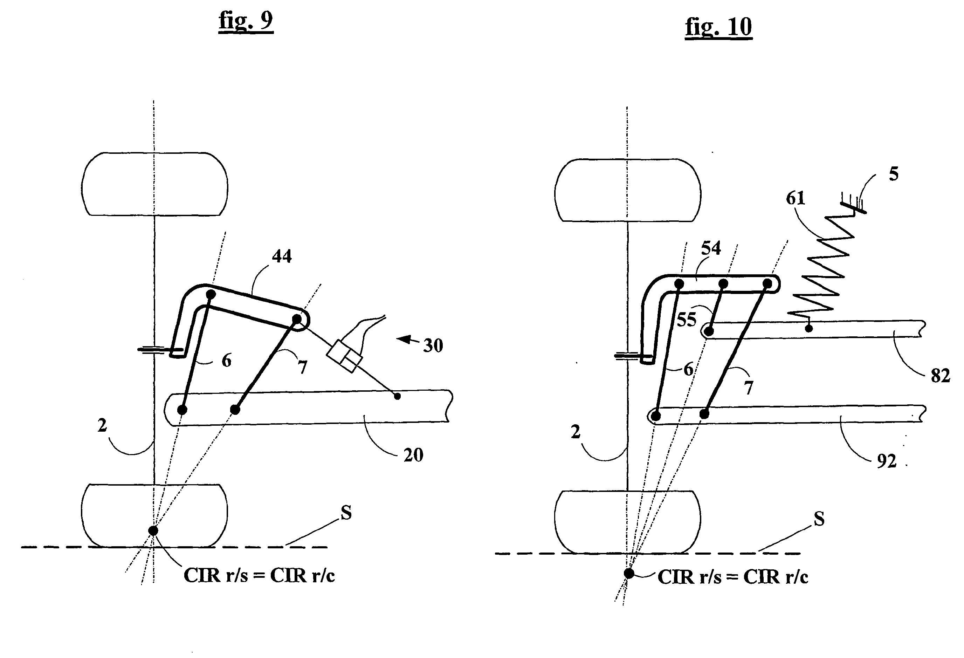

La figure 9 représente le cas d'un essieu rigide (ou brisé) comme on en trouve sur certains véhicules de tourisme et une majorité de véhicules utilitaires. L'essieu rigide 20 constitue ici le support intermédiaire et sa liaison (non représentée) à la caisse du véhicule procure le mouvement de débattement de suspension. Le porte-roue 44 est, selon l'invention, lié par deux biellettes 6, 7 à l'essieu rigide 20, de manière à définir un premier centre instantané de rotation (CIR r/s) du mouvement du porte-roue par rapport à l'essieu/support intermédiaire légèrement au dessus du sol S. Le deuxième centre instantané de rotation (CIR r/c) du mouvement du porte-roue par rapport à la caisse du véhicule est, dans cette position, confondu avec le premier centre instantané de rotation (CIR r/s) du mouvement du porte-roue par rapport à l'essieu car ce dernier est situé dans le plan de roue. Un vérin 30 permet de contrôler activement les mouvements du porte-roue par rapport à la suspension. Ce vérin 30 peut être commandé en fonction de paramètres de roulage du véhicule. Naturellement, cette alternative n'est pas limitée au cas de la figure 9 mais peut être adapté à d'autres modes de réalisations.

La figure 10 représente un mode de réalisation de l'invention dans lequel le porte-roue 54 est articulé par des biellettes (6, 7) au bras ou triangle inférieur 92 d'un système de suspension « multi-bras » ou « double-triangle ». le bras ou triangle supérieur 82, qui supporte le ressort 61, est articulé par une biellette supplémentaire 55. Cette biellette supplémentaire 55 est orientée vers le premier centre instantané de rotation (CIR r/s) pour avoir un effet neutre sur le carrossage (dans la position moyenne de la roue). Le deuxième centre instantané de rotation (CIR r/c) du mouvement du porte-roue par rapport à la caisse du véhicule est, dans cette position, confondu avec le premier centre instantané de rotation (CIR r/s) comme exposé à la figure 2.

Comme on l'a vu, on peut choisir, en fonction du fonctionnement souhaité, une position du deuxième centre instantané de rotation du mouvement de carrossage (CIR r/c) dans un intervalle allant de 0.5 R au dessus du sol à R sous le sol (R étant le rayon de la roue). Le fait de positionner ce point près du sol permet de limiter la variation de voie. Par exemple, dans le cas d'un centre instantané de rotation situé à R du sol et pour une roue de 300 mm de rayon, un carrossage de 5° provoque un déport de l'aire de contact par rapport à la caisse (variation de demie voie) d'environ 25 mm. On a constaté que cette valeur doit être considérée comme une limite à ne pas dépasser. Cependant, lorsque le deuxième centre instantané de rotation du mouvement de carrossage (CIR r/c) se situe au dessus du sol, c'est à dire que le dispositif de l'invention doit comporter un actionneur afin d'orienter activement le plan de roue (voir figure 5 et 9), des expérimentations ont montré qu'au delà d'une certaine hauteur, la puissance nécessaire à ce fonctionnement actif rend le système trop complexe et surtout trop consommateur d'énergie. Cette hauteur limite s'est avérée correspondre sensiblement à un demi rayon de roue.

Dans les cas de fonctionnement passif tels que décrits plus haut, une façon de vérifier le fonctionnement du dispositif de l'invention (et de mesurer sa sensibilité) est d'exercer un effort transversal (à l'aide, par exemple, d'une plaque à billes) au niveau de l'aire de contact de la roue d'un véhicule équipé du dispositif de l'invention et de mesurer la variation de l'angle de carrossage.

Les différents exemples des figures illustrent le fait que le dispositif de suspension de l'invention peut être réalisé à partir de principes de suspension très différents, pourvu que l'on obtienne la définition cinématique désirée. En particulier, les éléments que l'on a représentées dans des formes arbitraires peuvent prendre toute forme convenable permettant de positionner adéquatement les axes d'articulation et naturellement de supporter les contraintes de la liaison au sol. De même, les figures représentes des cas où l'articulation du porte-roue par rapport au support intermédiaire est une articulation « virtuelle » autour du premier centre instantané de rotation (CIR r/s), c'est à dire qu'elle n'est pas matérialisée par un axe mécanique mais elle résulte de l'articulation de plusieurs éléments. Le fait que cette articulation soit virtuelle permet de positionner le centre de cette rotation en tout point du plan et en particulier à proximité du sol ou même sous le sol. Une articulation mécanique, c'est à dire « non-virtuelle » comme un axe peut cependant être utilisée lorsque la position du premier centre instantané de rotation (CIR r/s) est compatible en terme d'encombrement et de garde au sol.

Une particularité intéressante de l'invention est qu'elle est applicable à tous les schémas de suspensions connus puisque l'on ajoute à ces systèmes existants des éléments supplémentaires permettant un degré de liberté de carrossage en plus du degré de liberté de suspension existant. Un avantage de ce dispositif de support ou de suspension est sa compacité qui permet de ne pas remettre en question la conception des véhicules courants. Une des caractéristiques essentielles de l'invention est qu'elle permet une variation du carrossage de chaque roue indépendamment des autres roues du véhicule et indépendamment du fait que la roue soit motrice ou directrice.

Les figures représentent en projection sur un plan orthogonal au sol et transversal au véhicule passant par le point d'application de la résultante des forces dans l'aire de contact, les principes et plusieurs modes de réalisation de l'invention. Cette représentation en deux dimensions est avantageuse afin d'illustrer clairement les caractéristiques essentielles de l'invention dont l'objectif est une variation contrôlée du carrossage. Dans cette représentation, le mouvement de carrossage est une rotation dans le plan autour d'un point de pivot (centre instantané de rotation). Il ne faut cependant pas oublier qu'une rotation s'effectue en réalité (en trois dimensions) autour d'un axe de pivot, réel ou virtuel (axe instantané de rotation). Cet axe est représenté par un point dans la représentation plane. Cet axe peut être construit sensiblement parallèle au plan du sol et à l'axe longitudinal du véhicule pour permettre les variations de carrossage visées. Cependant, en faisant varier l'orientation de cet axe, on peut créer, en plus des effets de carrossage, des effets supplémentaires de braquage, de pince, d'ouverture ou d'enroulement en fonction des efforts transversaux (courbe) et longitudinaux (freinage, accélération) subis par la roue dans l'aire de contact. L'homme du métier sait, en procédant à des essais et/ou par des méthodes théoriques, déterminer l'orientation qu'il convient d'adopter en fonction du comportement qu'il attend de ce dispositif. Des expérimentations ont par exemple montré qu'une inclinaison de 6° de cet axe de pivot de carrossage par rapport à l'horizontale permet d'induire un braquage lié au carrossage, selon un angle 10 fois inférieur à celui du carrossage. Ainsi lorsque les efforts transversaux induisent un carrossage de 5°, le braquage est d'environ 0.5°. L'inclinaison de l'axe de pivot peut être obtenu par exemple en équipant le véhicule d'un dispositif dont le plan de fonctionnement est incliné de 6° par rapport à la verticale.

Les articulations des différents éléments du dispositif de support ou du dispositif de suspension de l'invention peuvent être réalisées de diverses manières. Les articulations élastomériques utilisées couramment dans le domaine de la liaison au sol peuvent permettre de simplifier l'obtention de l'équilibre du système car elles introduisent des raideurs déterminées. D'autre part, il est connu qu'elles favorisent le confort du véhicule.

Le dispositif de support ou le dispositif de suspension de l'invention peut être mis en oeuvre dans le but de compenser les déformations des éléments de la liaison au sol des véhicules actuels et permettre de meilleures performances. C'est à dire que l'on peut employer le dispositif de support ou le dispositif de suspension de l'invention pour garantir que le plan de roue reste, en toutes circonstances, sensiblement orthogonal au plan du sol ou légèrement incliné pour tenir compte également de la déformation éventuelle du pneumatique. Ce but est atteint par un dispositif dont l'amplitude de carrossage utile est de quelques degrés seulement. Mais, le dispositif de support ou le dispositif de suspension de l'invention peut également être mise en oeuvre dans le but de permettre une variation bien plus importante du carrossage, c'est à dire permettre un fonctionnement de la liaison au sol plus proche de celui d'une motocyclette que de celui des véhicules à trois roues et plus, actuellement sur le marché.

D'une façon générale, les figures représentent une roue 2 comportant un bandage pneumatique mais l'invention s'adresse naturellement à tout type de roue avec ou sans bandage élastique, pneumatique ou non pneumatique, une caractéristique essentielle étant la position du centre instantané de rotation par rapport à l'aire de contact, quelle qu'elle soit.

## Revendications

1. Dispositif de support (3, 6, 7) destiné à lier une roue (2) à des éléments de suspension (4, 8, 9) d'un véhicule, ladite roue (2) de rayon 'R' étant destinée à reposer au sol (S), ledit dispositif de support comportant un porte-roue (3) et des moyens de carrossage (6, 7) conférant à ladite roue un degré de liberté de carrossage par rapport aux dits éléments de suspension (4, 8, 9), ledit dispositif de support étant **caractérisé en ce que** lesdits moyens de carrossage comprennent des biellettes (6,7) articulées entre le porte-roue et un support intermédiaire (4 ; 41 ; 42 ; 18 ; 19 ; 20), ledit support intermédiaire constituant l'un desdits éléments de suspension (4, 8, 9), l'intersection dés axes des biellettes définissant la position d'un premier centre instantané de rotation (CIR r/s) de ladite roue (2) par rapport aux dits éléments de suspension, lesdits moyens de carrossage étant configurés de manière à ce que, autour d'une position moyenne, le premier centre instantané de rotation (CIR r/s) soit situé dans un intervalle allant de 0.5 R au dessus du sol à R en dessous du sol.

2. Dispositif de support (3, 6, 7) selon la revendication 1, ledit premier centre instantané de rotation (CIR r/s) étant situé, pour une position moyenne de la roue, sous le plan du sol (S).

3. Dispositif de support selon la revendication 2, configuré de manière à ce que ledit premier centre instantané de rotation (CIR r/s) soit situé transversalement sous l'aire de contact (AC) de la roue (2) sur le sol (S).

4. Dispositif de support selon l'une des revendications précédentes, configuré de manière à ce qu'il soit proche de l'équilibre dans ladite position moyenne en l'absence d'effort transversal (Fy) exercé par le sol (S) sur la roue (2) dans l'aire de contact (AC).

5. Dispositif de support selon l'une des revendications précédentes, dans laquelle la position dudit premier centre instantané de rotation (CIR r/s) par rapport au centre de la roue forme un angle inférieur à 15° avec le plan de la roue (PR).

6. Dispositif de support selon la revendication 5, ledit premier centre instantané de rotation (CIR r/s) étant situé sensiblement dans le plan de la roue (PR).

7. Dispositif de support selon l'une des revendications précédentes, dans lequel les extrémités inférieures desdites biellettes sont liées au support intermédiaire (4, 18, 41, 20, 92) et les extrémités supérieures desdites biellettes sont liées au porte-roue (3, 32, 34, 44, 54).

8. Dispositif de support selon l'une des revendications précédentes, dans lequel ledit degré de liberté de carrossage est conféré par des déformations élastiques d'éléments déformables (35, 36) liant le porte-roue (34) aux dits éléments (18) de suspension.

9. Dispositif de support selon l'une des revendications précédentes, lesdits éléments de suspension comprenant une jambe de force (18) d'un système de suspension Macpherson.

10. Dispositif de support selon l'une des revendications précédentes, comportant en outre des moyens de contrôle (30, 50) aptes à influencer le carrossage de la roue.

11. Dispositif de support selon la revendication 10, les moyens de contrôle comprenant un élément élastiquement déformable s'opposant au mouvement de carrossage.

12. Dispositif de support selon la revendication 11, l'élément élastiquement déformable étant constitué par des articulations élastomériques.

13. Dispositif de suspension (1) pour véhicule comprenant le dispositif de support selon l'une des revendications précédentes.

14. Dispositif de suspension (1) selon la revendication 13 destiné à relier le porte-roue (3) à une caisse (5) d'un véhicule, ledit dispositif de suspension comportant des moyens de suspension (4, 8, 9) et conférant au porte-roue, par rapport à la caisse, un degré de liberté de carrossage et un degré de liberté de débattement de suspension indépendants l'un de l'autre, les dits moyens de carrossage (6, 7) et les dits moyens de suspension (4, 8, 9) étant configurés de manière à ce que le mouvement de carrossage du porte-roue par rapport à la caisse admette, autour d'une position moyenne, un deuxième centre instantané de rotation (CIR r/c) situé dans un intervalle allant de 0.5 R au dessus du sol à R en dessous du sol.

15. Dispositif de suspension (1) selon la revendication 14, ledit deuxième centre instantané de rotation (CIR r/c) étant situé dans un intervalle allant de 0.2 R au dessus du sol à 0.4 R en dessous du sol.

16. Dispositif de suspension (1) selon l'une des revendications 13 à 15, comportant un support intermédiaire (4) lié d'une part au porte-roue (3) et destiné à être lié d'autre part à la caisse (5), la liaison du porte-roue au support intermédiaire permettant ledit degré de liberté de carrossage et la liaison dudit support intermédiaire à la caisse permettant ledit degré de liberté de débattement de suspension.

17. Dispositif de suspension (1) selon l'une des revendications 13 à 16, ledit deuxième centre instantané de rotation (CIR r/c) du mouvement de carrossage du porte-roue (3) par rapport à la caisse (5) étant situé sous le plan du sol (S) afin que des efforts transversaux (Fy) exercés par le sol sur la roue (2) dans l'aire de contact (AC) induisent une inclinaison du parte-roue (3) par rapport à la caisse dans le sens d'une diminution de carrossage lorsque lesdits efforts transversaux sont dirigés vers l'intérieur du véhicule et dans le sens d'une augmentation de carrossage lorsque lesdits efforts transversaux sont dirigés vers l'extérieur du véhicule.

18. Dispositif de suspension (1) selon l'une des revendications 13 à 17, dans lequel ledit degré de liberté de carrossage est contrôlé par un moyen actif en fonction de paramètres de roulage dudit véhicule.

19. Dispositif de suspension (1) pour véhicule, le dispositif comprenant des bras ou triangles de suspension (8, 9) et un porte-roue (3) destiné à porter une roue (2) de rayon « R », ledit dispositif étant **caractérisé en ce qu'**il comporte en outre un support intermédiaire (4) et des biellettes (6, 7), ledit support intermédiaire (4) étant articulé par rapport aux bras ou triangles (8, 9) de manière à permettre un débattement de suspension, lesdites biellettes étant articulées par leurs parties inférieures audit support intermédiaire (4) et par leurs parties supérieures audit porte-roue (3) de manière à permettre un mouvement de carrossage de la roue (2) par rapport au support intermédiaire (4), l'intersection des axes des biellettes définissant un premier centre instantané de rotation (CIR r/s) de ladite roue (2) par rapport au support intermédiaire (4), le premier centre instantané de rotation (CIR r/s) étant situé, autour d'une position moyenne, dans un intervalle allant de 0.5 R au dessus du sol à R en dessous du sol.

20. Dispositif de suspension (1) pour véhicule selon la revendication 19 dans lequel 1c premier centre instantané de rotation (CIR r/s) est situé sous le sol (S).

21. Dispositif de suspension selon l'une des revendications 19 ou 20, dans lequel ledit premier centre instantané de rotation (CIR r/s) est situé sensiblement dans le plan de la roue (PR).

22. Dispositif de suspension selon l'une des revendications 18 à 21 comprenant en outre un moyen de contrôle passif (50) des variations de carrossage.

23. Véhicule équipé d'un dispositif de suspension (1) selon l'une des revendications 13 à 22.

## Claims

1. Support device (3, 6, 7), designed to connect a wheel (2) to suspension elements (4, 8, 9) of a vehicle, the said wheel (2) with a radius "R" being designed to be supported on the ground (S), the said support device comprising a wheel carrier (3) and camber means (6, 7), which provide the said wheel with a degree of freedom in terms of camber relative to the said suspension elements (4, 8, 9), the said support device being **characterized in that** the said camber means comprise connection rods (6, 7) which are articulated between the wheel carrier and an intermediate support (4; 41; 42; 18; 19; 20), the said intermediate support constituting one of the said suspension elements (4, 8, 9), the intersection of the axes of the connection rods defining the position of a first instantaneous centre of rotation (CIR r/s) of the said wheel (2) relative to the said suspension elements, the said camber means being configured such that, about a mean position, the first instantaneous centre of rotation (CIR r/s) is situated in an interval ranging from 0.5 R above the ground, to R beneath the ground.

2. Support device (3, 6, 7) according to claim 1, the said first instantaneous centre of rotation (CIR r/s) being situated, for a mean position of the wheel, beneath the plane of the ground (S).

3. Support device according to claim 2, configured such that the said first instantaneous centre of rotation (CIR r/s) is situated transversely beneath the area (AC) of contact the wheel (2) on the ground (S).

4. Support device according to one of the preceding claims, configured such that it is close to equilibrium in the said mean position, in the absence of transverse force (Fy) exerted by the ground (S) on the wheel (2) in the contact area (AC).

5. Support device according to one of the preceding claims, in which the position of the said first instantaneous centre of rotation (CIR r/s) relative to the centre of the wheel forms an angle of less than 15° with the plane of the wheel (PR).

6. Support device according to claim 5, the said first instantaneous centre of rotation (CIR r/s) being situated substantially in the plane of the wheel (PR).

7. Support device according to one of the preceding claims, in which the lower ends of the said connection rods are connected to the intermediate support (4, 18, 41, 20, 92) and the upper ends of the said connection rods are connected to the wheel carrier (3, 32, 34, 44, 54).

8. Support device according to one of the preceding claims, in which the said degree of camber freedom is provided by resilient deformations of deformable elements (35, 36), which connect the wheel carrier (34) to the said suspension elements (18).

9. Support device according to one of the preceding claims, the said suspension elements comprising a strut (18) of a MacPherson suspension system.

10. Support device according to one of the preceding claims, additionally comprising means for control (30, 50) which can affect the camber of the wheel.

11. Support device according to claim 10, the means for control comprising a resiliently deformable element, which opposes the camber movement.

12. Support device according to claim 11, the resiliently deformable element consisting of elastomeric articulations.

13. Suspension device (1) for a vehicle, comprising the support device according to one of the preceding claims.

14. Suspension device (1) according to claim 13, designed to connect the wheel carrier (3) to a body (5) of a vehicle, the said suspension device comprising suspension means (4, 8, 9) and providing the wheel carrier, relative to the body, with a degree of freedom in terms of camber, and a degree of freedom of suspension travel, which are independent from one another, the said camber means (6, 7) and the said suspension means (4, 8, 9) being configured such that, about a mean position, the camber movement of the wheel carrier relative to the body allows a second instantaneous centre of rotation (CIR r/c), which is situated in an interval ranging from 0.5 R above the ground, to R beneath the ground.

15. Suspension device (1) according to claim 14, the said second instantaneous centre of rotation (CIR r/c) being situated in an interval ranging from 0.2 R above the ground, to 0.4 R beneath the ground.

16. Suspension device (1) according to one of claims 13 to 15, comprising an intermediate support (4), which is connected firstly to the wheel carrier (3), and is designed to be connected secondly to the body (5), the connection of the wheel carrier to the intermediate support permitting the said degree of freedom in terms of camber, and the connection of the said intermediate support to the body permitting the said degree of freedom of suspension travel.

17. Suspension device (1) according to one of claims 13 to 16, the said second instantaneous centre of rotation (CIR r/c) of the camber movement of the wheel carrier (3) relative to the body (5) being situated beneath the plane of the ground (S), so that transverse forces (Fy) exerted by the ground on the wheel (2), in the contact area (AC), induce inclination of the wheel carrier (3) relative to the body, in the direction of a decrease in camber, when the said transverse forces are directed towards the interior of the vehicle, and in the direction of an increase in camber, when the said transverse forces are directed towards the exterior of the vehicle.

18. Suspension device (1) according to one of claims 13 to 17, in which the said degree of freedom in terms of camber is controlled by an active means, according to running parameters of the said vehicle.

19. Suspension device (1) for a vehicle, the device comprising suspension arms or wishbones (8, 9) and a wheel carrier (3) intended to support a wheel (2) with radius "R", the said device being **characterized in that** it further comprises an intermediate support (4) and connection rods (6, 7), the said intermediate support (4) being articulated relative to the arms or wishbones (8, 9) such as to permit a suspension travel, the said connection rods being articulated by their lower parts to the said intermediate support (4) and by their upper parts to the said wheel carrier (3) such as to permit the wheel (2) a movement in terms of camber relative to the intermediate support (4), the intersection of the axes of the connection rods defining the position of a first instantaneous centre of rotation (CIR r/s) of the said wheel (2) relative to the intermediate support (4), the first instantaneous centre of rotation (CIR r/s) being situated, about a mean position, in an interval ranging from 0.5 R above the ground, to R beneath the ground.

20. Vehicle suspension device (1) according to claim 19, in which the first instantaneous centre of rotation (CIR r/s) is situated beneath the ground (S).

21. Suspension device (1) according to one of claims 19 and 20, in which the said first instantaneous centre of rotation (CIR r/s) is situated substantially in the plane of the wheel (PR).

22. Suspension device (1) according to one of claims 18 to 21 further comprising a passive means (50) for controlling the variations in camber.

23. Vehicle equipped with a suspension device (1) according to one of claims 13 to 22.

## Patentansprüche

1. Unterstützungsvorrichtung (3, 6, 7), die dazu bestimmt ist, ein Rad (2) mit Aufhängungselementen (4, 8, 9) eines Fahrzeugs zu verbinden, wobei das Rad (2) mit Radius "R" dazu bestimmt ist, auf dem Boden (S) zu stehen, wobei die Unterstützungsvorrichtung einen Radhalter (3) und Radsturzmittel (6, 7), die dem Rad einen Radsturz-Freiheitsgrad in Bezug auf die Aufhängungselemente (4, 8, 9) verleihen, enthält, wobei die Unterstützungsvorrichtung **dadurch gekennzeichnet ist, dass** die Radsturzmittel Schwingarme (6, 7) enthalten, die zwischen dem Radhalter und einem Zwischenträger (4; 41; 42; 18; 19; 20) angelenkt sind, wobei der Zwischenträger eines der Aufhängungselemente (4, 8, 9) bildet, wobei der Schnittpunkt der Achsen der Schwingarme die Position eines ersten momentanen Drehzentrums (CIR r/s) des Rades (2) in Bezug auf die Aufhängungselemente definiert, wobei die Radsturzmittel in der Weise konfiguriert sind, dass sich das erste momentane Drehzentrum (CIR r/s) um eine mittlere Position innerhalb eines Intervalls befindet, das von 0,5R über dem Boden bis R unter dem Boden reicht.

2. Unterstützungsvorrichtung (3, 6, 7) nach Anspruch 1, wobei sich das erste momentane Drehzentrum (CIR r/s) für eine mittlere Radposition unter der Ebene des Bodens (S) befindet.

3. Unterstützungsvorrichtung nach Anspruch 2, die in der Weise konfiguriert ist, dass sich das erste momentane Drehzentrum (CIR r/s) transversal unter der Aufstandsfläche (AC) des Rades (2) auf dem Boden (S) befindet.

4. Unterstützungsvorrichtung nach einem der vorhergehenden Ansprüche, die in der Weise konfiguriert ist, dass sie sich in der Nähe des Gleichgewichts bei Abwesenheit einer transversalen Kraft (Fy), die durch den Boden (S) in der Aufstandsfläche (AC) auf das Rad (2) ausgeübt wird, in der mittleren Position befindet.

5. Unterstützungsvorrichtung nach einem der vorhergehenden Ansprüche, wobei die Position des ersten momentanen Drehzentrums (CIR r/s) in Bezug auf das Zentrum des Rades einen Winkel von weniger als 15° mit der Ebene des Rades (PR) bildet.

6. Unterstützungsvorrichtung nach Anspruch 5, wobei sich das erste momentane Drehzentrum (CIR r/s) im Wesentlichen in der Ebene des Rades (PR) befindet.

7. Unterstützungsvorrichtung nach einem der vorhergehenden Ansprüche, wobei die unteren Enden der Schwingarme mit dem Zwischenträger (4, 18, 41, 20, 92) verbunden sind und die oberen Enden der Schwingarme mit dem Radhalter (3, 32, 34, 44, 54) verbunden sind.

8. Unterstützungsvorrichtung nach einem der vorhergehenden Ansprüche, wobei der Radsturz-Freiheitsgrad durch elastische Verformungen von verformbaren Elementen (35, 36), die den Radhalter (34) mit den Aufhängungselementen (18) verbinden, geschaffen wird.

9. Unterstützungsvorrichtung nach einem der vorhergehenden Ansprüche, wobei die Aufhängungselemente eine Strebe (18) eines MacPherson-Aufhängungssystems enthalten.

10. Unterstützungsvorrichtung nach einem der vorhergehenden Ansprüche, die außerdem Steuermittel (30, 50) enthält, die den Radsturz des Rades beeinflussen können.

11. Unterstützungsvorrichtung nach Anspruch 10, wobei die Steuermittel ein elastisch verformbares Element enthalten, das der Radsturzbewegung entgegenwirkt.

12. Unterstützungsvorrichtung nach Anspruch 11, wobei das elastisch verformbare Element durch elastomere Gelenke gebildet ist.

13. Aufhängungsvorrichtung (1) für ein Fahrzeug, die die Unterstützungsvorrichtung nach einem der vorhergehenden Ansprüche enthält.

14. Aufhängungsvorrichtung (1) nach Anspruch 13, die dazu vorgesehen ist, den Radhalter (3) mit einer Karosserie (5) eines Fahrzeugs zu verbinden, wobei die Aufhängungsvorrichtung Aufhängungsmittel (4, 8, 9) enthält und dem Radhalter in Bezug auf die Karosserie einen Radsturz-Freiheitsgrad und einen Aufhängungsfederweg-Freiheitsgrad, die voneinander unabhängig sind, verleiht, wobei die Radsturzmittel (6, 7) und die Aufhängungsmittel (4, 8, 9) so konfiguriert sind, dass die Radsturzbewegung des Radhalters in Bezug auf die Karosserie um eine mittlere Position ein zweites momentanes Drehzentrum (CIR r/c) einführt, das in einem Intervall liegt, das von 0,5R über dem Boden bis R unter dem Boden reicht.

15. Aufhängungsvorrichtung (1) nach Anspruch 14, wobei das zweite momentane Drehzentrum (CIR r/c) in einem Intervall liegt, das von 0,2R über dem Boden bis 0,4R unter dem Boden reicht.

16. Aufhängungsvorrichtung (1) nach einem der Ansprüche 13 bis 15, die einen Zwischenträger (4) enthält, der einerseits mit dem Radhalter (3) verbunden ist und dazu bestimmt ist, andererseits mit der Karosserie (5) verbunden zu werden, wobei die Verbindung des Radhalters mit dem Zwischenträger den Radsturz-Freiheitsgrad ermöglicht und die Verbindung des Zwischenträgers mit der Karosserie den Aufhängungsfederweg-Freiheitsgrad ermöglicht.

17. Aufhängungsvorrichtung (1) nach einem der Ansprüche 13 bis 16, wobei sich das zweite momentane Drehzentrum (CIR r/c) der Radsturzbewegung des Radhalters (3) in Bezug auf die Karosserie (5) unter der Ebene des Bodens (S) befindet, damit die transversalen Kräfte (Fy), die durch den Boden in der Aufstandsfläche (AC) auf das Rad (2) ausgeübt werden, eine Neigung des Radhalters (3) in Bezug auf die Karosserie in Richtung einer Verringerung des Radsturzes bewirken, wenn die transversalen Kräfte in den Innenraum des Fahrzeugs gerichtet sind, und eine Neigung des Radhalters (3) in Bezug auf die Karosserie in Richtung einer Erhöhung des Radsturzes bewirken, wenn die transversalen Kräfte in die äußere Umgebung des Fahrzeugs gerichtet sind.

18. Aufhängungsvorrichtung (1) nach einem der Ansprüche 13 bis 17, wobei der Radsturz-Freiheitsgrad durch ein aktives Mittel in Abhängigkeit von Rollparametern des Fahrzeugs gesteuert wird.

19. Aufhängungsvorrichtung (1) für Fahrzeuge, wobei die Vorrichtung Querlenker oder Dreieckslenker (8, 9) und einen Radhalter (3), der dazu bestimmt ist, ein Rad (2) mit Radius "R" zu halten, enthält, wobei die Vorrichtung **dadurch gekennzeichnet ist, dass** sie außerdem einen Zwischenträger (4) und Schwingarme (6, 7) enthält, wobei der Zwischenträger (4) in Bezug auf die Querlenker oder Dreieckslenker (8, 9) in der Weise angelenkt ist, dass ein Aufhängungsfederweg ermöglicht wird, wobei die Schwingarme durch ihre unteren Teile an dem Zwischenträger (4) angelenkt sind und durch ihre oberen Teile an dem Radhalter (3) angelenkt sind, derart, dass eine Radsturzbewegung des Rades (2) in Bezug auf den Zwischenträger (4) ermöglicht wird, wobei der Schnittpunkt der Achsen der Schwingarme ein erstes momentanes Drehzentrum (CIR r/s) des Rades (2) in Bezug auf den Zwischenträger (4) definiert, wobei das erste momentane Drehzentrum (CIR r/s) um eine mittlere Position in einem Intervall liegt, das von 0,5R über dem Boden bis R unter dem Boden reicht.

20. Aufhängungsvorrichtung (1) für Fahrzeuge nach Anspruch 19, wobei sich das erste momentane Drehzentrum (CIR r/s) unter dem Boden (S) befindet.

21. Aufhängungsvorrichtung nach einem der Ansprüche 19 oder 20, wobei sich das erste momentane Drehzentrum (CIR r/s) im Wesentlichen in der Ebene des Rades (PR) befindet.

22. Aufhängungsvorrichtung nach einem der Ansprüche 18 bis 21, die außerdem ein passives Steuermittel (50) für Radsturzänderungen enthält.

23. Fahrzeug, das mit einer Aufhängungsvorrichtung (1) nach einem der Ansprüche 13 bis 22 ausgerüstet ist.
